# EUROPEAN PATENT APPLICATION

(11) **EP 4 760 834 A1**
(43) Date of publication of application: **17.06.2026**
(21) Application number: 24887266.5
(22) Date of filing: 21.03.2024
(51) Int. Cl.: H01M 10/04

(54) **BATTERY PRESSURIZING DEVICE AND BATTERY PRODUCTION SYSTEM**

(30) Priority: 08.11.2023 CN 202311477403
(71) Applicant: Contemporary Amperex Technology Co., Limited, Ningde, Fujian 352100 (CN)
(72) Inventor: WU, Kai, Ningde, Fujian 352100 (CN); XIAO, Zhongxing, Ningde, Fujian 352100 (CN)
(74) Representative: Ran, Handong
(86) International application number: PCT/CN2024/082877
(87) International publication number: WO 2025/097641

(57) **Abstract**

The present application provides a battery pressurizing device and a battery production system. The battery pressurizing device comprises a bearing mechanism and pressurizing assemblies. Each pressurizing assembly comprises a pressurizing plate and a plurality of pressurizing units; the pressurizing plate is movably arranged on the bearing mechanism in a first direction; each pressurizing unit comprises an adjustment portion and a pressurizing portion; the adjustment portion is connected to the pressurizing plate and the pressurizing portion; the end of the pressurizing portion in the first direction is provided with an outer end surface, and the outer end surface is used for abutting against a battery cell; and the adjustment portion is used for switching the position of the outer end surface in the first direction. The present application can realize pressurizing of the battery cells, and has good compatibility.

## Description

### CROSS-REFERENCE TO RELATED APPLICATIONS

The present application claims priority to Chinese Patent Application No. 202311477403.0, filed on November 08, 2023 and entitled "BATTERY PRESSURIZING DEVICE AND BATTERY PRODUCTION SYSTEM", which is incorporated herein by reference in its entirety.

### TECHNICAL FIELD

The present application relates to the field of battery technologies, and in particular, to a battery pressurizing device and a battery production system.

### BACKGROUND

With the development of new energy technologies, a battery is applied more and more widely, for example, in mobile phones, notebook computers, electric bicycles, electric vehicles, electric airplanes, electric ships, electric toy cars, electric toy ships, electric toy airplanes, electric tools, etc.

In some battery cell production processes, it is necessary to pressurize battery cells. Therefore, there is an urgent need to provide a device capable of pressurizing battery cells.

### SUMMARY

In view of the foregoing problems, the present application provides a battery pressurizing device and a battery production system, which can realize pressurizing of battery cells, and have good compatibility.

According to a first aspect, an embodiment of the present application provides a battery pressurizing device, comprising a bearing mechanism and pressurizing assemblies. Each pressurizing assembly comprises a pressurizing plate and a plurality of pressurizing units; the pressurizing plate is movably arranged on the bearing mechanism in a first direction; each pressurizing unit comprises an adjustment portion and a pressurizing portion; the adjustment portion is connected to the pressurizing plate and the pressurizing portion; the end of the pressurizing portion in the first direction is provided with an outer end surface, and the outer end surface is used for abutting against a battery cell; and the adjustment portion is used for switching the position of the outer end surface in the first direction.

In the foregoing solution, it allows for adaptation to different battery cells by arranging the plurality of pressurizing units and adjusting the positions of the pressurizing portions in the plurality of pressurizing units that move in the first direction, thereby improving the compatibility of the battery pressurizing device with different battery cells, and reducing the changeover costs.

In some embodiments, the adjustment portion comprises at least one of an elastic portion and a plurality of telescopic sections.

In the foregoing solution, by arranging the elastic portion or the telescopic sections to switch the position of the pressurizing portion in the first direction, the structure of the adjustment portion can be simplified, the process difficulty of the adjustment portion can be reduced, and the manufacturing costs can be reduced.

In some embodiments, the pressurizing unit is configured such that when a pressure applied by the pressurizing assembly to the battery cell reaches a first threshold, the adjustment portion is compressed from a first preset position to a second preset position, and the second preset position is located on the side, close to the pressurizing plate, of the first preset position.

In the foregoing solution, the battery cell is pressurized by adjusting a pressure threshold, which can simplify an adjustment principle of the adjustment portion, and is more convenient for the battery pressurizing device to pressurize battery cells of different specifications, thereby improving the adaptability of the battery pressurizing device.

In some embodiments, the pressurizing unit is at least located on at least one opposite side of the pressurizing plate in the first direction, to improve the efficiency of pressurizing the battery cell, thereby reducing the area occupied by the battery pressurizing device in a workshop.

In some embodiments, the battery pressurizing device comprises a plurality of pressurizing assemblies, and the plurality of pressurizing assemblies are arranged in the first direction.

In the foregoing solution, in the process of pressurizing the battery cells, the plurality of pressurizing assemblies move in the first direction to reduce the spacing between the adjacent pressurizing assemblies, so as to apply a pressure to the battery cells to simultaneously pressurize the plurality of battery cells, thereby improving the efficiency and reducing the process costs.

In some embodiments, the battery pressurizing device comprises a plurality of pressurizing modules, and the plurality of pressurizing modules are arranged in the first direction. Each pressurizing module comprises two adjacent pressurizing assemblies. The pressurizing units of the two pressurizing assemblies of the pressurizing module are arranged opposite to each other in the first direction.

In the foregoing solution, each pressurizing module can pressurize the battery cell or a battery string, and each pressurizing module moves in the first direction, thereby reducing the gap between the pressurizing assemblies in each pressurizing module, and reducing the gap between the adjacent pressurizing modules. There may be an extrusion force between the adjacent pressurizing modules, so that the battery cell is subjected to a continuous pressure.

In some embodiments, each pressurizing module comprises two first pressurizing assemblies and a second pressurizing assembly located between the two first pressurizing assemblies. The first pressurizing assembly comprises a first pressurizing plate and a first pressurizing unit. The first pressurizing unit is located on one side of the first pressurizing plate. The second pressurizing assembly comprises a second pressurizing plate and a second pressurizing unit. The second pressurizing units are located on two opposite sides of the second pressurizing plate in the first direction. The first pressurizing unit and the second pressurizing unit are arranged opposite to each other in the first direction.

In the foregoing solution, the battery cell or the battery string may be pressurized between the first pressurizing assembly and the second pressurizing assembly of each pressurizing module, which further improves the efficiency of pressurizing the battery cell, thereby reducing the overall volume of the battery pressurizing device, and reducing space occupied by the battery pressurizing device in a workshop.

In some embodiments, the area of the outer end surface is S, and S is within the range: 1 mm²≤S≤10 mm², so as to balance the manufacturing difficulty of the pressurizing portion and the adaptability of the pressurizing portion to battery cells of different specifications.

In some embodiments, the distance that the pressurizing portion is capable of moving in the first direction is H, and H is within the range: 1 mm≤H≤100 mm, so as to balance the flexibility of a pressurizing surface formed by the pressurizing portion and the manufacturing difficulty of the pressurizing portion.

In some embodiments, the pressurizing unit further comprises a buffer portion. The buffer portion covers the outer end surface. The arrangement of the buffer portion reduces the possibility that the battery cell is damaged due to contact with the outer end surface and an excessive pressure applied by the outer end surface, thereby improving the process yield and reducing the manufacturing costs.

In some embodiments, the bearing mechanism comprises a bearing plate, a first end plate, a second end plate, and a guide assembly. The bearing plate is used for bearing a battery unit. The first end plate and the second end plate are connected to two ends of the bearing plate in the first direction. The pressurizing assembly is located between the first end plate and the second end plate. The guide assembly is arranged on the side, facing the battery cell, of the bearing plate, and is connected to the first end plate and the second end plate. The pressurizing assembly is movably connected to the guide assembly in the first direction.

According to a second aspect, an embodiment of the present application provides a battery production system, comprising the battery pressurizing device according to any foregoing implementation.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

In order to more clearly describe the technical solutions of the embodiments of the present application, the accompanying drawings required for describing the embodiments of the present application will be briefly described below. Apparently, the accompanying drawings described below are only some embodiments of the present application. A person of ordinary skill in the art may further derive other drawings from these accompanying drawings without creative efforts.
FIG. 1 is a schematic diagram of a structure of a battery pressurizing device according to an embodiment of the present application;
FIG. 2 is a schematic diagram of a structure of another battery pressurizing device according to an embodiment of the present application;
FIG. 3 is a schematic diagram of a structure of a pressurizing module according to an embodiment of the present application;
FIG. 4 is a schematic diagram of a structure of another pressurizing module according to an embodiment of the present application;
FIG. 5 is a schematic diagram of a structure of another pressurizing module according to an embodiment of the present application;
FIG. 6 is a schematic diagram of a structure of a pressurizing unit according to an embodiment of the present application; and
FIG. 7 is a schematic diagram of a structure of another battery pressurizing device according to an embodiment of the present application.

Reference numerals in specific implementations are as follows:
100, battery cell;
10, bearing mechanism; 11, first end plate; 12, second end plate; 13, bearing plate; 14, guide assembly;
20, pressurizing assembly; 2, pressurizing plate;
3, pressurizing unit; 31, adjustment portion; 32, pressurizing portion; 321, outer end surface; 33, buffer portion;
M, pressurizing module; M1, first pressurizing assembly; M11, first pressurizing plate; M12, first pressurizing unit; M2, second pressurizing assembly; M21, second pressurizing plate; M22, second pressurizing unit;
P1, first plane; P2, second plane; X, first direction.

### DETAILED DESCRIPTION OF PREFERRED EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "provided with" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, an orientation or positional relationship indicated by technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like is an orientation or positional relationship shown based on the accompanying drawings, is intended only to facilitate the description of the embodiments of the present application and simplification of the description rather than indicating or implying that an apparatus or an element indicated must have a specific orientation, or be constructed and operated in a specific orientation, and therefore is not intended to be construed as a limitation to the embodiments of the present application.

In the description of the embodiments of the present application, unless otherwise specified and defined explicitly, the technical terms "mounted", "connected to", "connect", "fixed", and the like should be understood in a broad sense, which, for example, may be understood as fixed connection, detachable connection or integral connection, may be understood as mechanical connection, or electrical connection, or may be understood as direct connection, indirect connection via an intermediate medium, or communication between the interiors of two elements or interactions between two elements. A person of ordinary skill in the art may understand the specific meanings of the above terms in the embodiments of the present application according to specific situations.

With the development of battery technologies, a battery cell is used in more and more fields, gradually replacing traditional fossil energy sources in the automotive power field. The battery cell may store chemical energy and controllably convert it into electrical energy. A battery cell that can be reused may continue to be used after discharging by activating active materials therein by charging.

The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like, without limitation for the battery cell in the embodiments of the present application.

The battery cell production process generally includes steps such as stirring, coating, rolling, slitting, assembling and formation. The formation step is an extremely important step, which has a crucial impact on the cycle performance of the battery cell. The formation of the battery cell may refer to an initial charging and discharging process of the battery cell after electrolyte filing of the battery cell. For example, in a lithium-ion battery cell, formation can activate an active substance in the battery cell to activate the lithium-ion battery. In addition, a lithium salt and an electrolyte undergo a side reaction to generate a solid electrolyte interface (SEI) film on the negative electrode side of the battery cell. The film can avoid further occurrence of the side reaction, thereby reducing the loss of active lithium in the battery cell. The quality of the SEI film has a great impact on the cycle life, initial capacity loss, rate performance and the like of the battery cell.

During formation, gas may be generated inside the battery cell. If the gas cannot be discharged, the cycle performance of the battery cell may be affected. For example, in the lithium-ion battery cell, the problems such as lithium deposition on an interface may occur. In addition, the gas may further cause the battery cell to expand and deform, resulting in the unqualified size specification of the battery cell. Therefore, in the formation step, it is usually necessary to apply a pressure to the battery cell to accelerate the discharge of the gas, reduce the gas remaining inside the battery cell, and reduce the deformation of the battery cell, thereby improving the appearance yield of the battery cell.

The related art provides a battery pressurizing device that can pressurize battery cells. However, the battery pressurizing device can usually only pressurize battery cells of the same specification, and has poor compatibility. Different battery cells requires different battery pressurizing devices, which increases battery production costs.

In view of this, the present application provides a technical solution, which allows for adaptation to different battery cells by arranging a plurality of pressurizing units and adjusting the positions of pressurizing portions in the plurality of pressurizing units that move in a first direction, thereby improving the compatibility of the battery pressurizing device with different battery cells and reducing the changeover costs.

The battery pressurizing device disclosed in the embodiment of the present application may be applied to the battery formation step, or may be applied to other battery process steps. For example, the battery pressurizing device according to the embodiment of the present application may be further applied to an electrolyte injection step. Specifically, in the electrolyte injection step, an electrolyte injection apparatus injects an electrolyte into the battery cell at high pressure and high speed, thereby causing the internal pressure of the battery cell to increase. The battery pressurizing device according to the embodiment of the present application can pressurize the battery cell from the outside to offset the internal pressure of the battery cell and reduce the deformation of the battery cell.

Certainly, the battery pressurizing device according to the embodiment of the present application may be used for pressurizing the battery cell, or may be used for pressurizing other members to be pressurized in a battery production process.

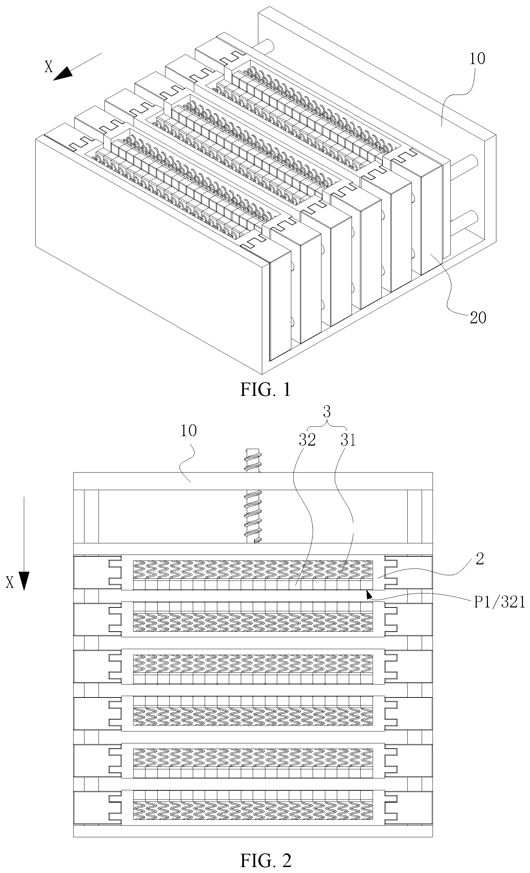

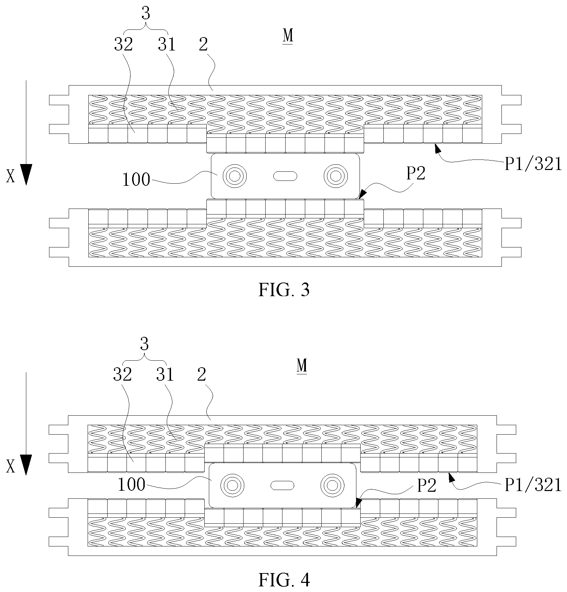

FIG. 1 is a schematic diagram of a structure of a battery pressurizing device according to an embodiment of the present application. FIG. 2 is a schematic diagram of a structure of another battery pressurizing device according to an embodiment of the present application. FIG. 3 is a schematic diagram of a structure of a pressurizing module according to an embodiment of the present application.

With reference to FIG. 1 to FIG. 3, an embodiment of the present application provides a battery pressurizing device, including a bearing mechanism 10 and pressurizing assemblies 20. Each pressurizing assembly 20 includes a pressurizing plate 2 and a plurality of pressurizing units 3. The pressurizing plate 2 is movably arranged on the bearing mechanism 10 in a first direction X. Each pressurizing unit 3 includes an adjustment portion 31 and a pressurizing portion 32. The adjustment portion 31 is connected to the pressurizing plate 2 and the pressurizing portion 32. The end of the pressurizing portion 32 in the first direction X is provided with an outer end surface 321. The outer end surface 321 is used for abutting against a battery cell 100. The adjustment portion 31 is used for switching the position of the outer end surface 321 in the first direction X.

The battery pressurizing device may be used for pressurizing a member to be pressurized. For example, the following description is made, with the battery cell 100 as the member to be pressurized.

The bearing mechanism 10 may be used for bearing the plurality of pressurizing assemblies 20. For example, when the battery cell 100 needs to be pressurized, the bearing mechanism 10 may further be used for bearing the battery cell 100.

The plurality of pressurizing assemblies 20 are movably connected to the bearing mechanism 10 in the first direction X. The plurality of pressurizing assemblies 20 may be used for pressurizing one or a plurality of battery cells 100.

In some examples, the plurality of battery cells 100 are arranged in the first direction X and form a battery string. Optionally, when the battery cells 100 need to be pressurized, one battery string may be arranged between two adjacent pressurizing assemblies 20, or a plurality of battery strings may be arranged side by side.

Before the battery cell 100 needs to be pressurized, the plurality of pressurizing units 3 on the pressurizing plate 2 in each pressurizing assembly 20 are all in a first state. That is, the outer end surfaces 321 of the plurality of pressurizing portions 32 are all located on a first plane P1. The pressurizing units 3 on each pressurizing plate 2 are adjusted based on the sizes of different battery cells 100 or the numbers of different battery strings, so that a corresponding number of pressurizing portions 32 with the corresponding area protrude from the first plane P1 in the first direction X. For example, that the battery cell 100 has a square surface with the area to be pressurized of 10 cm² and each pressurizing portion 32 has a square outer end surface 321 with the area of 1 cm² is used as an example for description. Before the battery cell 100 is pressurized, the ten pressurizing units 3 of each pressurizing assembly 20 of two adjacent pressurizing assemblies 20 need to be adjusted, so that the pressurizing portions 32 of the ten pressurizing units 3 protrude from the first plane P1 in the first direction X and the plurality of outer end surfaces 321 form a 10 cm ² square pressurizing surface. Then, the adjusted pressurizing assemblies 20 pressurize the battery cell 100. Certainly, in some examples, it is not necessary to adjust the adjustment portion 31 before pressurizing the battery cell 100. The adjustment portion 31 may alternatively implement the position movement of the pressurizing portion 32 in the first direction X based on a pressure generated on the battery cell 100.

It should be noted that the surface to be pressurized of the battery cell 100 is a surface, facing the pressurizing portion 32, of the battery cell 100. A pressurizing surface of the pressurizing assembly 20 is a surface formed by the pressurizing portions 32 of the plurality of pressurizing units 3 that move to preset positions in the first direction X. The pressurizing area corresponding to the number of the adjusted pressurizing units 3 in the adjusted pressurizing assembly 20 may be the same as the area to be pressurized of the battery cell 100. Certainly, the pressurizing area may alternatively be smaller or greater than the area to be pressurized based on design requirements. It may be understood that the number of the pressurizing units 3 on each pressurizing plate 2 and the number of the pressurizing units 3 that requires adjustment may be different. For example, the adjusted pressurizing assembly 20 may include the pressurizing units 3 in the first state and the pressurizing units 3 that form the pressurizing surface after adjustment. Optionally, the first state may be that the battery pressurizing device is in an inactive state.

The shape of the surface to be pressurized of the battery cell 100 is matched with the shape of the pressurizing surface formed by the plurality of outer end surfaces 321. For example, when the surface to be pressurized of the battery cell 100 is a flat surface, the pressurizing surface formed by the plurality of outer end surfaces 321 is also a flat surface. When the surface to be pressurized of the battery cell 100 is a surface provided with a concave portion or a convex portion, the pressurizing surface formed by the plurality of outer end surfaces 321 is a surface that is provided with a convex portion or a concave portion and that corresponds to the surface to be pressurized. The following uses an example in which the pressurizing surface formed by the plurality of outer end surfaces 321 is located on a second plane P2 for description.

Optionally, the positional relationship between the first plane P1 and the second plane P2 may be that the first plane P1 is located between the second plane P2 and the pressurizing plate 2, or the second plane P2 is located between the first plane P1 and the pressurizing plate 2. Optionally, the spacing between the first plane P1 and the second plane P2 may be a fixed value, or may be within a range. For example, the spacing between the first plane P1 and the second plane P2 may be 10 mm, or may range from 1 mm to 10 mm.

The pressurizing unit 3 includes the adjustment portion 31 and the pressurizing portion 32. The adjustment portion 31 may move in the first direction X to drive the pressurizing portion 32 to move in the first direction X. For example, the adjustment portion 31 may switch the position of the outer end surface 321 of the pressurizing portion 32 from the first plane P1 to the second plane P2, and certainly, may switch from the second plane P2 to the first plane P1.

The battery pressurizing device according to the embodiment of the present application is adapted to different battery cells 100 by arranging the plurality of pressurizing units 3 and adjusting the positions of the pressurizing portions 32 in the plurality of pressurizing units 3 that move in the first direction X, thereby improving the compatibility of the battery pressurizing device with different battery cells 100 and reducing the changeover costs.

In some embodiments, the battery pressurizing device may be applied to the battery formation step to squeeze out gas inside the battery cell 100 during formation.

In some embodiments, the battery pressurizing device may be applied to the electrolyte injection step of the battery, to offset a positive pressure applied by an electrolyte injection apparatus to the interior of the battery cell 100 during electrolyte injection, thereby reducing the deformation of a housing of the battery cell 100.

In some embodiments, after a pressurizing-related step is completed, an external driving component no longer presses the pressurizing plate 2. In this case, the battery pressurizing device according to the embodiment of the present application may alternatively be used as a conventional tray for bearing the battery cell 100. The battery pressurizing device may circulate with a production line, thereby improving the production capacity and the material flow line planning.

In some embodiments, the battery pressurizing device may be further applied to other scenarios where the battery cell 100 needs to be pressurized, such as may be applied to the scenario where the battery cell 100 is subjected to a long-term charge-discharge cycle. In these scenarios, the pressurizing assembly 20 pressurizes the battery cell 100, so that positive and negative electrode plates of the battery cell 100 are closely attached to a separator, thereby improving the uniformity of an interface reaction and prolonging the service life of the battery.

In some embodiments, as shown in FIG. 3, the adjustment portion 31 includes at least one of an elastic portion and a plurality of telescopic sections.

Optionally, the elastic portion may include an elastic portion made of an elastic material, such as a spring.

Optionally, the telescopic section may include a hollow rod. For example, the plurality of telescopic sections may be formed by a plurality of concentric hollow rods that are nested with each other and are gradually larger.

It may be understood that when the outer end surfaces 321 of the pressurizing portions 32 are all located on the first plane P1, the elastic portion is in a compressed state or a normal state. When the outer end surface 321 of the pressurizing portion 32 is located on the second plane P2, the elastic portion is switched to a stretched state. When the elastic portion is in a normal state, the elastic portion is neither compressed nor stretched. Similarly, when the outer end surfaces 321 of the pressurizing portions 32 are all located on the first plane P1, the plurality of telescopic sections are nested with each other. When the outer end surfaces 321 of the pressurizing portions 32 are located on the second plane P2, the plurality of telescopic sections are switched to a configuration where at least some of the telescopic sections are extended.

In the embodiment of the present application, by arranging the elastic portion or the telescopic sections to switch the position of the pressurizing portion 32 in the first direction X, the structure of the adjustment portion 31 can be simplified, the process difficulty of the adjustment portion 31 can be reduced, and the manufacturing costs can be reduced.

FIG. 4 is a schematic diagram of a structure of another pressurizing module according to an embodiment of the present application.

In some embodiments, as shown in FIG. 4, the pressurizing unit 3 is configured such that when a pressure applied by the pressurizing assembly 20 to the battery cell 100 reaches a first threshold, the adjustment portion 31 is compressed from a first preset position to a second preset position. The second preset position is located on the side, close to the pressurizing plate 2, of the first preset position.

In the embodiment of the present application, the second preset position is located between the first preset position and the pressurizing plate 2. When the pressurizing assembly 20 pressurizes the battery cell 100, the outer end surfaces 321 of the pressurizing units 3 may all be located on the first plane P1, that is, located in the first preset position. As the battery cell 100 is pressurized, the adjustment portion 31 in the pressurizing unit 3 subjected to the interaction force of the battery cell 100 may move toward the pressurizing plate 2 to drive the pressurizing portion 32 to move toward the pressurizing plate 2. When the pressure applied to the battery cell 100 reaches the first threshold, the adjustment portion 31 under pressure moves from the first preset position to the second preset position, and the outer end surfaces 321 of the plurality of pressurizing portions 32 moving toward the pressurizing plate 2 form the pressurizing surface and are located on the second plane P2.

In the embodiment of the present application, the battery cell 100 is pressurized by adjusting a pressure threshold, which can simplify an adjustment principle of the adjustment portion 31, and is more convenient for the battery pressurizing device to pressurize battery cells 100 of different specifications, thereby improving the adaptability of the battery pressurizing device.

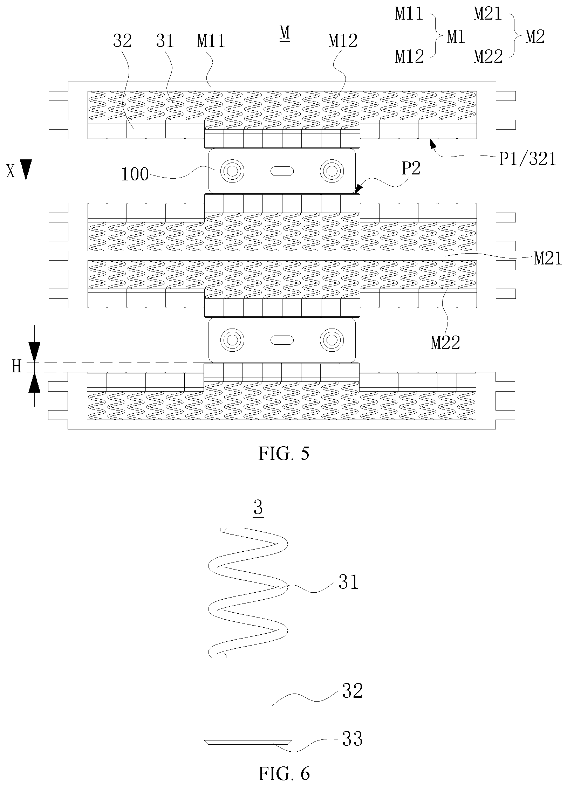

FIG. 5 is a schematic diagram of a structure of another pressurizing module according to an embodiment of the present application.

In some embodiments, as shown in FIG. 3 to FIG. 5, the pressurizing unit 3 is at least located on at least one opposite side of the pressurizing plate 2 in the first direction X, to improve the efficiency of pressurizing the battery cell 100, thereby reducing the area occupied by the battery pressurizing device in a workshop.

Optionally, the pressurizing units 3 may be located on one side of the pressurizing plate 2 in the first direction X, or the pressurizing units 3 may be located on two sides of the pressurizing plate 2 in the first direction X.

In some embodiments, as shown in FIG. 1, the battery pressurizing device includes a plurality of pressurizing assemblies 20. The plurality of pressurizing assemblies 20 are arranged in the first direction X.

In the process of pressurizing the battery cells 100, the plurality of pressurizing assemblies 20 move in the first direction X to reduce the spacing between the adjacent pressurizing assemblies 20, so as to apply a pressure to the battery cells 100 to simultaneously pressurize the plurality of battery cells 100, thereby improving the efficiency and reducing the process costs.

In some embodiments, as shown in FIG. 3 and FIG. 4, the battery pressurizing device includes a plurality of pressurizing modules M. The plurality of pressurizing modules M are arranged in the first direction X. Each pressurizing module M includes two adjacent pressurizing assemblies 20. The pressurizing units 3 of the two pressurizing assemblies 20 of the pressurizing module M are arranged opposite to each other in the first direction X.

In the embodiment of the present application, each pressurizing module M can pressurize the battery cell 100 or the battery string. Each pressurizing module M moves in the first direction X, thereby reducing the gap between the pressurizing assemblies 20 in each pressurizing module M, and reducing the gap between the adjacent pressurizing modules M. There may be an extrusion force between the adjacent pressurizing modules M, so that the battery cell 100 is subjected to a continuous pressure.

In some embodiments, as shown in FIG. 5, each pressurizing module M includes two first pressurizing assemblies M1 and a second pressurizing assembly M2 located between the two first pressurizing assemblies M1. The first pressurizing assembly M1 includes a first pressurizing plate M11 and a first pressurizing unit M12. The first pressurizing unit M12 is located on one side of the first pressurizing plate M11. The second pressurizing assembly M2 includes a second pressurizing plate M21 and a second pressurizing unit M22. The second pressurizing units M22 are located on two opposite sides of the second pressurizing plate in the first direction X. The first pressurizing unit M12 and the second pressurizing unit M22 are arranged opposite to each other in the first direction X.

In the embodiment of the present application, the battery cell 100 or the battery string may be pressurized between the first pressurizing assembly M1 and the second pressurizing assembly M2 of each pressurizing module M, which further improves the efficiency of pressurizing the battery cell 100, thereby reducing the overall volume of the battery pressurizing device, and reducing space occupied by the battery pressurizing device in a workshop.

In some other examples, for the number of the second pressurizing assemblies M2 between the two first pressurizing assemblies M1, there may be one second pressurizing assembly M2, or a plurality of second pressurizing assemblies M2.

In some embodiments, the area of the outer end surface 321 is S, and S is within the range: 1 mm²≤S≤10 mm², so as to balance the manufacturing difficulty of the pressurizing portion 32 and the adaptability of the pressurizing portion to battery cells 100 of different specifications.

In some examples, the area of the outer end surface 321 may be 1 mm², 2 mm², 3 mm², 5 mm², or 10 mm².

In some embodiments, as shown in FIG. 5, the distance that the pressurizing portion 32 is capable of moving in the first direction X is H, and H is within the range: 1 mm≤H≤100 mm, so as to balance the flexibility of the pressurizing surface formed by the pressurizing portion 32 and the manufacturing difficulty of the pressurizing portion 32.

In some examples, the distance that the pressurizing portion 32 is capable of moving in the first direction X may be 1 mm², 10 mm², 20 mm², 30 mm², 50 mm², or 100 mm².

FIG. 6 is a schematic diagram of a structure of a pressurizing unit according to an embodiment of the present application.

In some embodiments, as shown in FIG. 6, the pressurizing unit 3 further includes a buffer portion 33. The buffer portion 33 covers the outer end surface 321. The arrangement of the buffer portion 33 reduces the possibility that the battery cell 100 is damaged due to contact with the outer end surface 321 and an excessive pressure applied by the outer end surface 321, thereby improving the process yield and reducing the manufacturing costs.

Optionally, the material of the buffer portion 33 includes, but is not limited to, rubber and silicone.

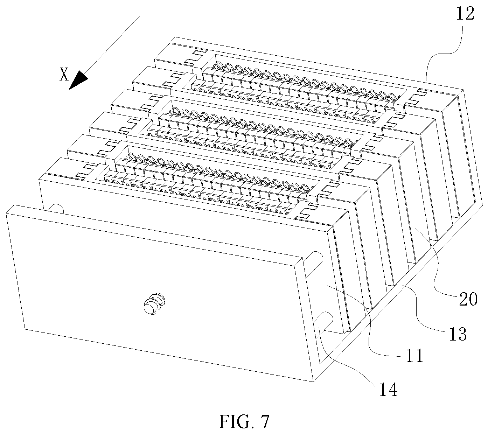

FIG. 7 is a schematic diagram of a structure of another battery pressurizing device according to an embodiment of the present application.

In some embodiments, as shown in FIG. 7, the bearing mechanism 10 includes a bearing plate 13, a first end plate 11, a second end plate 12, and a guide assembly 14. The bearing plate 13 is used for bearing a battery unit. The first end plate 11 and the second end plate 12 are connected to two ends of the bearing plate 13 in the first direction X. The pressurizing assembly 20 is located between the first end plate 11 and the second end plate 12. The guide assembly 14 is arranged on the side, facing the battery cell 100, of the bearing plate 13, and is connected to the first end plate 11 and the second end plate 12. The pressurizing assembly 20 is movably connected to the guide assembly 14 in the first direction X.

The bearing plate 13 can be used for bearing the battery cell 100, and certainly, can bear the pressurizing assembly 20, the first end plate 11, the second end plate 12, and the guide assembly 14.

Optionally, at least one of the first end plate 11 and the second end plate 12 is movably connected to the guide assembly 14 in the first direction X.

For example, the first end plate 11 is movably arranged. The second end plate 12 is fixedly connected to the bearing plate 13. The first end plate 11 may abut against the pressurizing assembly 20 in the first direction X to apply a pressure to the pressurizing assembly 20 in the first direction X. Alternatively, the first end plate 11 and the second end plate 12 move toward each other in the first direction X. The first end plate 11 and the second end plate 12 abut against the pressurizing assembly 20 in the first direction X to apply a pressure to the pressurizing assembly 20 in the first direction X.

In some examples, the battery pressurizing device may further include a drive part. The drive part may include a push rod. One of the first end plate 11 and the second end plate 12 is fixedly connected to the push rod, and applies a pressure to the pressurizing assembly 20 through the push rod.

The guide assembly 14 is rod-shaped. One of the first end plate 11 and the second end plate 12 may be provided with a through hole. The guide assembly 14 is arranged in the through hole, so that the first end plate 11 or the second end plate 12 is movably arranged in the first direction X.

Optionally, the pressurizing assembly 20 may include a connecting portion. The connecting portion may be provided with a through hole. The guide assembly 14 is arranged in the through hole, so that the pressurizing assembly 20 is movably arranged in the first direction X.

Optionally, the connecting portion may be integrated with the pressurizing plate 2. Alternatively, the connecting portion and the pressurizing plate 2 are separate structures.

According to a second aspect, an embodiment of the present application provides a battery production system, including the battery pressurizing device according to any foregoing implementation.

It should be noted that the battery production system according to the embodiment of the present application has the beneficial effects of the battery pressurizing device in any of the foregoing implementations. For details, reference may be made to the foregoing description of the beneficial effects of the battery pressurizing device, which will not be repeated in the embodiment of the present application.

With reference to FIG. 1 to FIG. 3 and FIG. 7, an embodiment of the present application provides a battery pressurizing device, including a bearing mechanism 10 and pressurizing assemblies 20. Each pressurizing assembly 20 includes a pressurizing plate 2 and a plurality of pressurizing units 3. The pressurizing plate 2 is movably arranged on the bearing mechanism 10 in a first direction X. Each pressurizing unit 3 includes an adjustment portion 31 and a pressurizing portion 32. The adjustment portion 31 is connected to the pressurizing plate 2 and the pressurizing portion 32. The end of the pressurizing portion 32 in the first direction X is provided with an outer end surface 321. The outer end surface 321 is used for abutting against a battery cell 100. The adjustment portion 31 is used for switching the position of the outer end surface 321 in the first direction X.

The adjustment portion 31 includes at least one of an elastic portion and a plurality of telescopic sections. The pressurizing unit 3 is configured such that when a pressure applied by the pressurizing assembly 20 to the battery cell 100 reaches a first threshold, the adjustment portion 31 is compressed from a first preset position to a second preset position. The second preset position is located on the side, close to the pressurizing plate 2, of the first preset position.

The battery pressurizing device includes a plurality of pressurizing modules M, and the plurality of pressurizing modules M are arranged in the first direction X. Each pressurizing module M includes two adjacent pressurizing assemblies 20. The pressurizing units 3 of the two pressurizing assemblies 20 of the pressurizing module M are arranged opposite to each other in the first direction X. The area of the outer end surface 321 is S, and S is within the range: 1 mm²≤S≤10 mm². The distance that the pressurizing portion 32 is capable of moving in the first direction X is H, and H is within the range: 1 mm≤H≤100 mm.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A battery pressurizing device, comprising:
a bearing mechanism; and
a pressurizing assembly, comprising a pressurizing plate and a plurality of pressurizing units, wherein the pressurizing plate is movably arranged on the bearing mechanism in a first direction, and each pressurizing unit comprises an adjustment portion and a pressurizing portion, wherein:
the adjustment portion is connected to the pressurizing plate and the pressurizing portion;
an end of the pressurizing portion in the first direction is provided with an outer end surface, wherein the outer end surface is configured to abut against a battery cell; and
the adjustment portion is configured to switch the position of the outer end surface in the first direction.

2. The battery pressurizing device according to claim 1, wherein the adjustment portion comprises at least one of an elastic portion and a plurality of telescopic sections.

3. The battery pressurizing device according to claim 1 or 2, wherein the pressurizing unit is configured such that when a pressure applied by the pressurizing assembly to the battery cell reaches a first threshold, the adjustment portion is compressed from a first preset position to a second preset position, and the second preset position is located on the side, close to the pressurizing plate, of the first preset position.

4. The battery pressurizing device according to any one of claims 1 to 3, wherein the pressurizing unit is at least located on at least one opposite side of the pressurizing plate in the first direction.

5. The battery pressurizing device according to claim 4, wherein the battery pressurizing device comprises a plurality of the pressurizing assemblies, and the plurality of pressurizing assemblies are arranged in the first direction.

6. The battery pressurizing device according to claim 5, wherein the battery pressurizing device comprises a plurality of pressurizing modules, and the plurality of pressurizing modules are arranged in the first direction;
each pressurizing module comprises two adjacent pressurizing assemblies; and
the pressurizing units of the two pressurizing assemblies of the pressurizing module are arranged opposite to each other in the first direction.

7. The battery pressurizing device according to claim 6, wherein each pressurizing module comprises two first pressurizing assemblies and a second pressurizing assembly located between the two first pressurizing assemblies, wherein:
the first pressurizing assembly comprises a first pressurizing plate and a first pressurizing unit, the first pressurizing unit being located on one side of the first pressurizing plate; and
the second pressurizing assembly comprises a second pressurizing plate and a second pressurizing unit, the second pressurizing units being located on two opposite sides of the second pressurizing plate in the first direction,
wherein the first pressurizing unit and the second pressurizing unit are arranged opposite to each other in the first direction.

8. The battery pressurizing device according to any one of claims 1 to 7, wherein the area of the outer end surface is S, and S is within the range: 1 mm²≤S ≤10 mm².

9. The battery pressurizing device according to any one of claims 1 to 8, wherein the distance that the pressurizing portion is capable of moving in the first direction is H, and H is within the range: 1 mm≤H≤100 mm.

10. The battery pressurizing device according to any one of claims 1 to 9, wherein the pressurizing unit further comprises a buffer portion, and the buffer portion covers the outer end surface.

11. The battery pressurizing device according to any one of claims 1 to 10, wherein the bearing mechanism comprises:
a bearing plate configured to bear a battery cell;
a first end plate and a second end plate, connected to two ends of the bearing plate in the first direction, wherein the pressurizing assembly is located between the first end plate and the second end plate; and
a guide assembly, arranged on the side, facing the battery cell, of the bearing plate and connected to the first end plate and the second end plate, wherein the pressurizing assembly is movably connected to the guide assembly in the first direction.

12. A battery production system, comprising:
the battery pressurizing device according to any one of claims 1 to 11.
